Europäisches Patentamt

European Patent Office

Office européen des brevets

(11) Publication number: 0 354 699
A2

# (12) EUROPEAN PATENT APPLICATION

(21) Application number: 89307751.1

(22) Date of filing: 31.07.89

(51) Int. Cl.4: B65D 65/38

(30) Priority: 01.08.88 JP 190732/88
17.03.89 JP 64039/89

(43) Date of publication of application:
14.02.90 Bulletin 90/07

(84) Designated Contracting States:
AT BE CH DE ES FR GB GR IT LI LU NL SE

(71) Applicant: THREE S. TECHNOLOGIES B.V.
Westerkade 2a
NL-3016 CL Rotterdam(NL)

(72) Inventor: Shigemitsu, Masahiro
3-31-2 Takanodai Nerima-ku
Tokyo(JP)

(74) Representative: Skone James, Robert Edmund
et al
GILL JENNINGS & EVERY 53-64 Chancery
Lane
London WC2A 1HN(GB)

(54) Film material.

(57) A film material (1) suitable for use as, for example, a printing material or packaging material, composed of colourless or coloured transparent thermoplastic polymer film having one surface (2) molded into an uneven shape so that light incident from a flat surface (5) on the opposite side of the film exhibits a total reflection or an approximate thereto.

Fig. 1

# FILM MATERIAL

The present invention relates to a film material which is suitable for use as, for example, a printing material or a packaging material, obtained by using a thermoplastic polymer film.

Conventionally, as the printing material, paper, plastic, aluminum foil and laminated products thereof or thin aluminum and iron, glass, fiber, plates are used. These printing materials, however, provide only a planar printing effect on the same surface, even if the surfaces thereof are worked, and there is a demand for a printing base material by which a printing effect different from such a planar printing effect is obtained.

On the other hand, packaging materials are conventionally made from materials such as paper, plastic, aluminum foil and laminated products thereof, and thin aluminum, iron, and glass, plate and various packaging materials such as these are widely available in the market. These packaging materials, however, have advantages and disadvantages, each posing various problems. For example, vessels made of glass are ideal from the viewpoint of hygiene and shielding the contents from the outer air but are limited in use due to a great weight and easy breakage, and an increased production thereof is not expected except for special uses. On the other hand, metal cans of aluminum and iron, etc., provide an excellent content storability and shielding from the outer air, and are light in weight, but problems arise of recovery and of the influence on the contents of low molecular weight components contained in the inner surface coating. It is difficult to break these rigid vessels, with the aim of intentionally changing the content, but it is possible to remove the lids or break the metal can with a sharp implement, to thereby change the content, and countermeasures to such actions are now urgently underway.

In contrast, base materials such as paper, plastic, and aluminium foil are excellent materials which are light in weight and can be formed by various molding techniques for packaging, but provide no protection against deliberate actions to denature the content by breaking the packages, and countermeasures against such actions are also underway.

In accordance with the present invention, there is provided a film material comprising a colourless or coloured transparent thermoplastic polymer film having one surface molded into an uneven shape so that light incident from a flat surface on the opposite side of the film is totally or approximately reflected.

The present invention provides a film material having a total or approximately total reflection function, suitable for use as, for example, a printing material or packaging material.

The present invention can also provide a printing material which solves the problems of the prior art as described above, i.e., the provision of only the planar printing effect, to provide a new printing effect not found in the prior art.

The present invention can also provide in some examples a packaging material capable of protecting the packages against deliberate actions to denature the contents therein by breaking the packages.

In some examples, the invention provides a printing material comprising a colourless or coloured transparent thermoplastic polymer film (e.g., having a thickness of 30 to 200 $\mu$m) the printing being effected on the non-molded surface of the film.

In other examples, the present invention provides a packaging material comprising two films of a colourless or coloured transparent thermoplastic polymer having, for example, a thickness of 30 to 200 $\mu$m, each being molded into an uneven shape such as saw teeth or a shape similar thereto in a single direction or a plurality of directions on one surface so that light incident from the flat surface on the opposite side of the film is totally reflected, the films being superposed one on the other so that the uneven shape grooves of the two respective films are at a required angle from each other.

The films of the packaging material may be sealed by heating at peripheral portions thereof under a reduced pressure and in a state by which a moire stripe is exhibited, the material exhibiting a total reflection phenomenon and the moire stripe disappearing when released from the reduced pressure state.

The term "packaging material" used in the present invention means a material which can per se form a packaging vessel, or a material for externally packaging a vessel.

The present invention will be better understood from the description set forth below with reference to the accompanying drawings, in which:

Figure 1 is a sectional view of the total reflection function of the film material;

Fig. 2 is a sectional view of a composite film of two films superposed so that the uneven shape grooves such as saw teeth cross at right angles;

Fig. 3 is a sectional view of a vessel prepared by using the film material shown in Fig. 2; and

Fig. 4 is a sectional view of a bottle equipped with a cap in which the base material shown in Fig. 1 is used as the film for sealing.

The film to be used in the present invention is obtained by heat molding to an uneven shape which exhibits a total reflection or a reflection approximate thereto by, for example, an engraved roll, in the form of saw teeth or a similar shape. As the shape of the roll surface, a roll having a cross section showing uneven grooves such as saw teeth engraved in parallel, or a roll having grooves of the same or a similar shape engraved at any desired angle (e.g., a right angle or 30° to 90°) engraved on the surface in parallel can be used. Also, although an incomplete total reflection phenomenon is provided, a film having a fine unevenness engraved in any desired shape can be used. The film thus obtained can totally reflect the light incident on a smooth surface thereof or an approximate thereto, whereby a surface having a high luster can be provided.

Examples of the transparent thermoplastic polymer which can be used in the present invention include polyethylene, polypropylene, polyethyleneterephthalate, polyvinyl chloride, polyurethane, ethylene-vinyl alcohol copolymer, and nylon.

The thermoplastic polymer film to be used in the present invention preferably has a thickness of , for example, 30 to 200 μm, more preferably 120 to 200 μm, but in the case of a heat shrinkable film obtained by stretching, the thickness is preferably 30 to 60 μm. The thermoplastic film molded according to the present invention can be used at the thickness thereof as such, but when the molded pattern is in the shape of saw teeth, the film stretched to 2- to 3-fold in the teeth direction is shrunk by heating to 150 to 200°C and exhibits a total reflection, and therefore, instead of the heat shrinkable film generally used, a heat shrinkable film having a new printing effect as described above can be provided.

When printing is performed, according to the first aspect of the present invention, on the surface of the plastic film having a luster giving a total reflection or an approximate thereto, the printed image appears to be positioned sterically in the midst of the reflected light. Further, when the uneven surface molded of the printed film is superposed on the surface of a paper or a plastic film, the tones thereof are under the total reflected light, whereby a printing effect exhibiting a particular steric tone can be obtained. For example, when the film of the present invention is superposed on a black paper or plastic film, a reflected light approximate to iron is obtained, and in the case of a gray color, a reflected light approximate to aluminum is obtained. When the system of the present invention is used as the packaging material, by selecting the tone corresponding to the content, an image of the content can be given.

When printing is performed on the smooth surface with pinholes provided to a relatively unnoticeable extent on the thermoplastic film of the present invention, and the film is superposed on an existing vessel, it is possible to change the shape of the vessel by changing the pressure within the vessel. For example, when an aqueous solution heated to about 90°C, such as coffee or oolong, is filled and sealed in a vessel, and thereafter cooled, a reduction in volume of 10 to 15% occurs, and therefore, in the case of a plastic vessel the paper is recessed and the commercial value lost. But when the film of the present invention is superposed on these vessels, even if deformation occurs due to a reduced pressure in the vessel, the outer air flows into the gap between the film and the vessel through the pinholes, whereby the film of the present invention retains its normal form, and no internal deformation of the vessel is observed due to the total reflection phenomenon even when printing is not effected. The pinholes are preferably 1 mm in diameter or less, and the number thereof is 2 to 3 per one vessel having a volume of 250 ml.

According to the second aspect of the present invention, the packaging material is provided from two sheets of the above-mentioned film material.

The uneven shapes of the two films to be superposed one on the other can be respectively the same or different.

In a preferred embodiment of the present invention, two films having grooves with a cross section such as saw teeth formed in parallel in only one direction are superposed one on the other so that the grooves thereof are at any desired angle (e.g., 30° - 90°).

As the method of superposing the films, the method in which two films are brought into close contact (for example, under a reduced pressure) and the peripheral portions thereof heat sealed, or the method in which two films are partially plastered by an adhesive, can be used. Plastering of the films may be suitably practiced by conventional heat adhesion or adhesion by hot melt. To prepare a packaging vessel from the plastered composite film, methods generally employed in the prior art such as cutting, preliminary molding, and heat sealing can be used.

When a liquid is filled in the packaging vessel made of the material of the present invention, and a hole is opened externally with, for example, an injection needle, the liquid within the vessel will penetrate the resultant hole at the uneven superposed portion of the wall faces of the packaging vessel, whereby the total reflection phenomenon of the vessel will disappear, i.e., the luster will be lost, and simultaneously the transparency will be increased. Accordingly, such an action can be instantly and clearly detected. With a composite film obtained by superposing two films each having a surface formed into an uneven shape such as saw teeth and coated with an iron salt (e.g. ferric chloride) and tannic acid or a derivative thereof, one on the other, a vessel for holding a liquid is prepared and water is filled therein. When a hole is opened externally in the vessel with, for example, an injection needle, water will penetrate the gap between the films, whereby the total reflection phenomenon of the vessel will disappear, the luster will be lost, and simultaneously, the transparency increased and the color changed to black, and thus such an action can be instantly detected.

When a plastered composite film is plastered on the mouth of a bottle by a hot melt process, and further, a transparent cap having a hot melt adhesive adhered to the innerside central point or at any desired points, the cap exhibits the total reflection phenomenon to give a high luster, but when the cap is opened, the plastered film is gradually cut along the periphery thereof and is wrinkled by elongation until it is completely peeled off. When the film is peeled off, the luster due to the total reflection will disappear and the transparency increased, whereby it becomes possible to look into the inner portion from above, and see that the cap has been opened.

Also, where the film is embossed into an uneven shape such as saw teeth, as in the present invention, when the two films are superposed one on the other so that the molded surfaces are in contact with each other, or the molded surface is superposed on the not molded flat surface, a sharp moire stripe will be formed if the directions of the embossing working are the same or approximate to each other. The laminated film prepared by placing the superposed film exhibiting the moire stripe under a reduced pressure and effecting sealing by heat melting the peripheral portion thereof, will exhibit the total reflection phenomenon with a disappearance of the moire stripe through separation of the respective films when the reduced pressure state is released by breaking the film with a needle or a sharp instrument. Thus, according to the above method, it is possible to prevent such an action.

The thermoplastic polymer film to be used in the present invention preferably has a thickness of 30 to 200 $\mu$m as described above, more preferably 120 to 200$\mu$m.

Further, the package of the present invention, as apparent from the structure thereof, has a high heat insulating property, and therefore, can be used as a vessel for containing cooled or heated substances. Further, different from metal cans or glass bottles, the vessel is light in weight and the problem of disposal thereof can be solved by burning same, thus providing excellent characteristics not found in the prior art.

In the various types described above, the two plastic films constituting the laminated product can be the same kind or can be different, and when a combination of the films utilizing the characteristics thereof is used, a remarkable effect can be obtained. For example, when a polyethyleneterephtahalate film is used internally and a polyvinylidene chloride film externally, as the packaging vessel of the present invention, the external film exhibits a high luster, and the internal surface is safe with regard to beverages and foods and will not change the flavor thereof. Further, when a carbonated beverage is contained in the packaging, carbon dioxide enters the gap between the films by permeating through the inside film, but the external polyvinylidene chloride film has an excellent gas barrier property, and therefore, the pressure becomes approximately equal to the inner pressure to reach an equilibrium, whereby it is possible to maintain the usual pressure of 3 to 4 kg/cm$^2$ of a carbonated beverage for a period of approximately 6 months. Further, when an attempt is made to inject foreign matter through the wall of such a packaging, the liquid inside the vessel will penetrate the resultant hole and the luster will be lost, simultaneously with a change of the transparency thereof, and such an action can be instantly and clearly detected.

## EXAMPLES

The present invention will now be further illustrated by, but is by no means limited to, the following Examples.

### Example 1

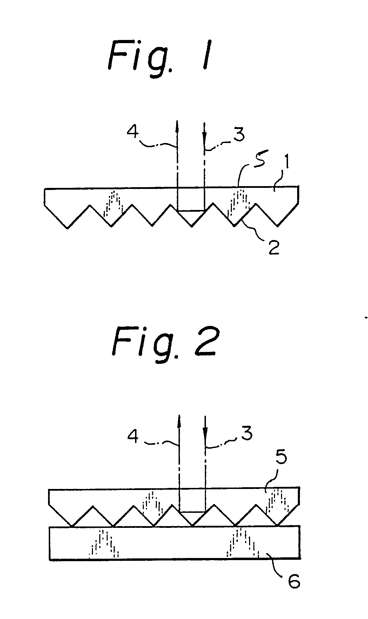

As shown in Fig. 1, one surface (2) of a polypropylene film (1) with a thickness of about 200 $\mu$m is molded in one direction into an uneven shape similar to saw teeth so that a total reflection is obtained, and print (5) is applied to the smooth non-molded surface.

The product thus worked gives an aesthetically-pleasing print effect in which the printed image is observed in the reflected light formed through the total reflection phenomenon.

### Example 2

When the film obtained in Fig. 1 is superposed on a black film (6) as shown in Fig. 2, an aesthetically-pleasing printed product in which the printed image is observed in the reflected light with a metal luster tone similar to iron plate is obtained.

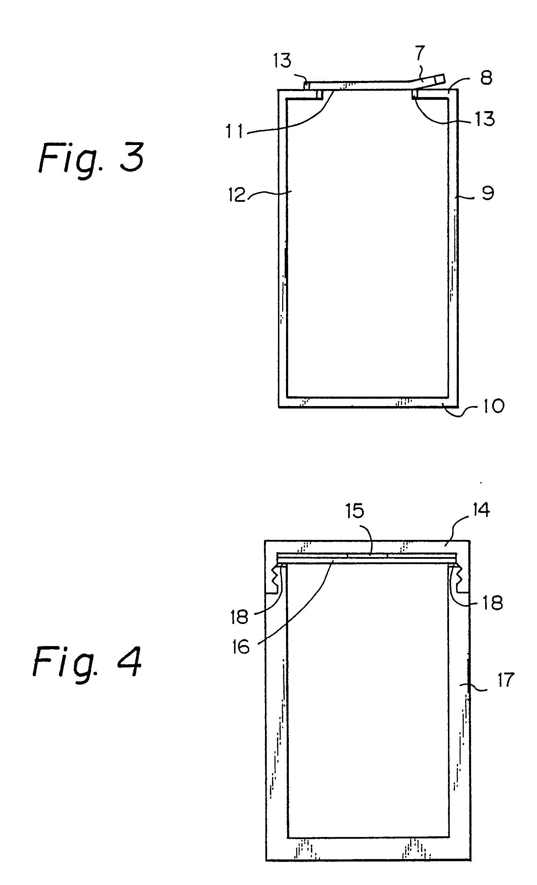

A liquid vessel shown in Fig. 3 was prepared with the film shown in Fig. 2, and orange juice was filled therein. When the vessel was pierced with an injection needle, the orange juice penetrated the gap between the two films, whereby the total reflection phenomenon disappeared and the color was changed to black, and thus that action was clearly detectable.

## Example 3

Instead of vessels made of commercially available paper, a vessel having the film in Example 1 applied with printing superposed on the surface of a white original paper for a paper vessel before printing gave an aesthetically-pleasing printing effect in which a printed image could be seen in the milky white totally reflected light. When orange juice was filled in the vessel made of paper of this Example, and the vessel pierced by an injection needle therethrough, orange juice penetrated between the paper and the plastic film, whereby the total reflection phenomenon disappeared, thus clearly indicating such an action had occurred.

## Example 4

A polypropylene film with a thickness of 100 μm was molded into an uneven shape such as saw teeth and capable of a total reflection, and stretch-worked two-fold in the monoaxial direction of the saw teeth. Printing was effected on the smooth surface of the film thus obtained, with a thickness of about 50 μm, and when a vessel made of polystyrene of 100 ml volume was wrapped with the printed film and shrunk by heating to 150 to 170°C for 2 seconds, an aesthetically-pleasing vessel was obtained in which a printed image was seen in the totally reflected milky white light.

## Example 5

A vessel made of polyethylene terepththalate and having a volume of 250 ml (cylindrically, thickness about 100 μm) was filled with an aqueous coffee solution and sealed by heating to about 80°C. This vessel was covered by a polypropylene film of the present invention provided with 2 pinholes about 1 mm in diameter. Initially, the vessel was cylindrically shaped, but a recess was formed on the side wall of the cylinder when left to cool to room temperature. Air then flowed into the gap through the pinholes of the film of the present invention, and the film returned to the initial cylindrical shape, whereby little deformation of the vessel was observed and the commercial value thereof was maintained.

## Example 6

As shown in Fig. 1, one surface (2) of a polypropylene film (1) with a thickness of 200 μm was molded in one direction into an uneven shape similar to saw teeth, and subsequently, the molded surfaces of two films (5) and (6) thus molded were placed in contact with each other, as shown in Fig. 2, and superposed so that the directions thereof crossed at a right angle, and a cylindrical packaging for containing a liquid, as shown in Fig. 3, was prepared from the thus-obtained material.

As shown in Fig. 3, the packaging was composed of three parts, a cap (8), a flank (9) and a bottom (10), and the cap (8) provided with an opening (11). A cover (7) was adhered to the opening (11), the cover (7) comprising the same composite film as the main body (Fig. 2), by a hot melt adhesive (13). The liquid in the vessel could be removed by peeling off the cover (7).

The surface of the vessel has an opaque appearance having a high luster due to the total reflection phenomenon, but if the film was externally pierced by an injection needle, the liquid penetrated the gap between the two films, whereby the total reflection phenomenon disappeared and the transparency at that portion was increased, and thus such an action was clearly detectable.

## Example 7

As shown in Fig. 4, a composite film (16) of polypropylene was adhered to the opening of a bottle by a hot melt adhesive (18), and further, with a hot melt adhesive (15) provided internally of the cap (14), a bottle (17) with the structure having the composite film (16) and the cap (14) plastered together was prepared. The above composite film (16) was the same as the film having the structure shown in Fig. 2, but the constitution of Example 2 preferably had a thin upper film thickness of, for example, 100 μm, and was easily elongated. In such a case, the smooth portion of the film became about 30 μm and exhibited an elongation under a slight stress.

When the bottle (17) as shown in Fig. (4) was opened by rotating the cap (14), the film at the upper part of the composite film (16) exhibited a remarkable elongation at the central portion and a generation of wrinkles over all, thus clearly showing that an attempt had been made to open the cap (14). Further, when the cap (14) was taken off and the film having wrinkles formed at the upper portion removed, the lower film appeared on the surface in the state shown in Fig. 2, whereby an increased transparency was observed and the total reflection phenomenon was lost, thus clearly showing that the cap had been once removed.

Example 8

Using an ethylene-vinyl alcohol polymer [EVAL, manufactured by Kuraray K.K.] as the thermoplastic polymer, a composite film having the structure shown in Fig. 2, which totally reflected light incident on the surface thereof, was prepared.

One surface of the EVAL film having a thickness of about 200 μm was molded into an uneven shape such as saw teeth and capable of total reflection (Fig. 1), and the films were superposed one on the other so that the uneven shape grooves crossed at a right angle as shown in Fig. (2). Using the base material obtained by heating and melting the peripheral portion of the composite film, a base material for the liquid as shown in Fig. 3 was prepared.

The surface of the vessel had an opaque appearance with a high luster due to the total reflection phenomenon, but if the film was pierced by an injection needle, the liquid penetrated the gap between the two films, and thus the total reflection phenomenon disappeared and the transparency at that portion was increased, whereby such an action was clearly detectable.

Eval exhibits an excellent gas barrier property in a low humidity environment, but this effect is reduced with an increase in the humidity. Nevertheless, in the case of the two composite films wherein air was permitted to coexist therebetween, it was found that the gas barrier property was not influenced by the outside environment. Namely, the vessel obtained according to this Example had a gas barrier property and a "trick-preventing" function.

Example 9

In Example 6, on the surface (2) formed into an uneven shape such as saw teeth, to exhibit the total reflection phenomenon, an aqueous ferric chloride solution and an aqueous sodium tannate solution were coated and dried, and superposed one on the other so that the uneven shape grooves crossed at a right angle, to prepare a cylindrical vessel for contain a liquid.

The vessel had an opaque appearance and a high luster, due to the total reflection phenomenon, but when the film was pierced with an injection needle, water penetrated the gap between the two films, whereby the total reflection phenomenon disappeared, resulting in an increased transparency and a change in color to black, due to a reaction between tannic acid and iron. Thus, such an action was clearly detectable.

Example 10

One surface (2) of an ethylene-vinyl alcohol film with a thickness of about 100 μm was molded in one direction in an uneven shape such as a saw teeth shape so that the total reflection phenomenon was obtained (Fig. 1), and the films were superposed one on the other so that the uneven shape grooves crossed at a right angle.

When superposing the above two films, an ethanol-water mixture (mixing ratio 1:1) was filled in the gap between the films over the whole surface, and the peripheral portion was sealed by heating under a reduced pressure by a vacuum pump, to provide a transparent film laminated product. When a pinhole was opened by piercing the film laminated product with an injection needle, the liquid in the gap was immediately released and air penetrated the gap, whereby the total reflection phenomenon was lost to give the film a transparent pearl-like surface. Thus, such an action was clearly detectable.

The film laminated product of this Example is suitable for the packaging of dry foods such as chocolate and candy.

Example 11

One surface of an ethylene-vinyl alcohol film with a thickness of about 100 μm was molded in one direction into an uneven shape such as saw teeth so that a total reflection phenomenon was obtained (Fig. 1), and the two molded films were superposed one on the other so that the directions of the uneven shape grooves were identical or approximate to each other.

As the superposing method, the molded surfaces were placed in contact with each other or the molded surface was placed in contact with the flat surface (non-molded surface). In this Example, both methods were attempted and moire stripe having similar effects were obtained by both methods. The width of the moire stripe differed depending on the molding direction, and the width became greater from about 1 mm to about 5 mm as the direction was deviated. In the case of the present invention, the moire stripe had a greater luster than the peripheral portion, to form an aesthetically-pleasing pattern.

When the film laminated product having the moire stripe superposed as described above was placed under a reduced pressure and sealed by heating and melting the peripheral portion, a film laminated product on which the moire stripe was stably maintained was obtained.

The film laminated product was an aesthetically-pleasing film laminated product having a lustrous moire stripe formed on the pearl-like surface exhibiting a total reflection, and when the reduced pressure state was broken by opening a small hole with a needle of an injection syringe or a knife, the two films were separated from each other and the moire stripe disappeared to exhibit only a usual total reflection phenomenon, whereby such an action was clearly detectable.

## Claims

1. A film material (1) comprising a colourless or coloured transparent thermoplastic polymer film having one surface (2) molded into an uneven shape so that light incident from a flat surface (5) on the opposite side of the film is totally or approximately reflected.

2. A printing material composed of a film material according to claim 1, wherein printing is effected on the non-molded surface (5) of the film.

3. A material according to claim 1 or claim 2, which is stretched in a specific direction to provide the characteristics of a heat-shrinkable film.

4. A material according to any of the preceding claims, wherein the non-molded surface of the film is provided with pinholes of any desired size and number such that deformation of a vessel covered with the material due to a pressure change within the vessel cannot be observed.

5. In combination: a colourless or coloured paper or polymer film (6) superposed on the molded surface (2) of a film according to any of the preceding claims with a thin fluid layer sandwiched therebetween.

6. A combination according to claim 5 defining packaging material and comprising two sheets of films according to any of claims 1 to 4 superposed one on the other so that the uneven shape grooves on the two respective films are at a required angle from each other.

7. A combination according to claim 6, wherein the films are superposed in such a way that the molded surface of one film (1) is in contact with the non-molded flat surface of the other film (6).

8. A combination according to any of claim 5 to 7, wherein the fluid is air.

9. A combination according to at least claim 6, wherein when a liquid penetrates between the two films (1,6) or the film on the incident light side is peeled off, the total reflection phenomenon disappears and the transparency increases.

10. A combination according to at least claim 6, wherein the two films (1,6) comprise an iron salt and tannic acid or a derivative thereof coated on the uneven shape surface, and when water or an aqueous solution penetrates between the films, the colour of the material becomes black simultaneously with the disappearance of the total reflection phenomenon.

11. A combination according to at least claim 6, wherein any desired liquid is filled as a thin layer between the two films (1,6) and a peripheral portion thereof is sealed by heating under a reduced pressue to form a transparent state, and the transparent state exhibits a total reflection phenomenon when released from the reduced pressure state.

12. A combination according to at least claim 6, wherein each film is molded into an uneven shape in a single direction or a plurality of directions on one surface so that light incident from the flat surface on the opposite side of the film is totally reflected, the films being sealed by heating at peripheral portions thereof under a reduced pressure and in a state by which a moire stripe is exhibited, the material exhibiting a total reflection phenomenon and the moire stripe disappearing when released form the reduced pressure state.

# Fig. 1

# Fig. 2

*Fig. 3*

*Fig. 4*